# FASCICULE DE BREVET EUROPEEN

(11) **EP 0 787 924 B1**
(45) Date de publication et mention de la délivrance du brevet: **01.08.2001**
(21) Numéro de dépôt: 97400195.0
(22) Date de dépôt: 28.01.1997
(51) Int. Cl.: F16F 13/26, B60K 5/12

(54) **Perfectionnements aux dispositifs antivibratoires hydrauliques**
Verbesserungen an hydraulischen Anti-Schwingungsvorrichtungen
Improvements to hydraulic anti-vibration devices

(30) Priorité: 30.01.1996 FR 9601075
(43) Date de publication de la demande: 06.08.1997
(73) Titulaire: HUTCHINSON, 75008 Paris (FR)
(72) Inventeur: Gennesseaux, André, 28200 Chateaudun (FR)
(74) Mandataire: Burbaud, Eric

(56) Documents cités:
- EP-A- 0 243 714
- EP-A- 0 440 536
- EP-A- 0 536 761
- EP-A- 0 561 703
- EP-A- 0 621 418
- US-A- 4 886 253
- US-A- 5 333 846
- PATENT ABSTRACTS OF JAPAN vol. 95, no. 009 & JP 07 233852 A (N O K MEGURASUTEITSUKU KK), 5 Septembre 1995,

## Description

L'invention est relative aux dispositifs antivibratoires hydrauliques destinés à être interposés aux fins d'amortissement et de liaison, voire de support, entre deux éléments rigides faisant partie respectivement de la caisse ou châssis d'un véhicule et du moteur de ce véhicule.

Elle concerne plus particulièrement, parmi ces dispositifs, ceux qui comprennent :
- une armature rigide solidarisable avec l'élément rigide de la caisse et comportant une portée annulaire qui présente un axe central,
- une tête rigide solidarisable avec l'autre élément rigide,
- une paroi annulaire en élastomère évasée vers le bas, de préférence tronconique, offrant une bonne résistance à la compression axiale et reliant de façon étanche la portée annulaire à la tête,
- une membrane flexible étanche portée par l'armature et définissant avec elle, avec la paroi et avec la tête une enceinte étanche,
- une cloison rigide et étanche portée par l'armature et divisant l'enceinte en une chambre de travail, du côté de la paroi et une chambre de compensation, du côté de la membrane, ces deux chambres présentant chacune un fond solidaire de l'armature rigide,
- un passage étranglé faisant communiquer en permanence les deux chambres entre elles,
- une masse de liquide remplissant les deux chambres et le passage étranglé,
- un piston rigide délimitant en partie la chambre de travail et monté sur l'armature de façon à pouvoir se déplacer avec une amplitude de débattement limitée par rapport à cette armature,
- un organe excitateur électrique monté sur ladite armature pour déplacer ledit piston,
- et un circuit électronique connectable à une source de courant électrique et propre à commander l'organe excitateur de façon à appliquer sur le piston des forces alternatives tendant à atténuer les vibrations de ce piston.

Comme on le sait, avec un tel dispositif :
- les oscillations de relativement grande amplitude (savoir supérieure à 0,5 mm) et de relativement basse fréquence (savoir de l'ordre de 5 à 15 Hz) telles que celles dues au "hachis" engendré sur le véhicule par les cahots de la route ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées,
- les vibrations de relativement petite amplitude (inférieure à 0,5 mm) et de relativement haute fréquence (généralement comprise entre 20 et 200 Hz), telles que celles dues au fonctionnement du moteur se traduisent par des vibrations "naturelles" du piston susceptibles d'atténuer ou filtrer la transmission des vibrations en cause,
- l'application des forces électriques d'atténuation sur le piston est effectuée de façon telle que ces forces font subir à ce piston des "contre-vibrations" artificielles déphasées par rapport à ses vibrations naturelles et tendant à annuler ces dernières en supprimant en définitive toute vibration au niveau de l'armature : cet effet atténuateur ou filtrant des vibrations est parfois désigné sous l'appellation "atténuation active".

De tels dispositifs "actifs" ont par exemple été décrits dans le document EP-A-0 621 418.

Ces dispositifs permettent d'atteindre, pour la caisse du véhicule, un degré d'isolation qui ne peut pas être obtenu avec les dispositifs "passifs", c'est-à-dire dépourvus de moyens d'atténuation active.

L'invention a pour but de proposer pour les dispositifs actifs du genre en question des constructions qui répondent encore mieux que jusqu'à ce jour aux diverses exigences de la pratique, notamment :
- en rendant possible l'interchangeabilité des dispositifs actifs en question avec les dispositifs passifs classiques du fait de la réduction de hauteur des premiers,
- en améliorant le fonctionnement de ces dispositifs actifs du fait du raccourcissement des connexions et de la meilleure protection des circuits de commande vis-à-vis des échauffements,
- et en conduisant à un prix de revient diminué.

A cet effet, les dispositifs antivibratoires actifs du genre en question selon l'invention sont essentiellement caractérisés en ce que leur armature rigide forme :
- d'une part des premier et deuxième bacs disposés côte à côte selon une direction perpendiculaire à l'axe central, ces bacs constituant les fonds de la chambre de travail et de la chambre de compensation,
- et d'autre part un boîtier contenant côte à côte l'organe excitateur et son circuit électronique de commande, le boîtier étant séparé des chambres de travail et de compensation par l'armature rigide.

Dans des modes de réalisation préférés, on a recours en outre à l'une et/ou à l'autre des dispositions suivantes :
- l'armature rigide est constituée par une plaque épaisse présentant une première face qui est évidée par les premier et deuxième bacs et une deuxième face qui est bordée par une cloison périphérique et qui délimite le boîtier avec cette cloison,
- l'armature rigide comporte une plaque épaisse présentant, d'une part, une première face qui est évidée par le premier bac correspondant à la chambre de travail, et d'autre part, une deuxième face qui est bordée par une cloison périphérique et qui délimite le boîtier avec cette cloison, le deuxième bac étant formé dans la cloison périphérique et étant orienté vers l'extérieur, le boîtier étant séparé en un premier compartiment qui contient l'organe excitateur et un deuxième compartiment qui communique avec le premier compartiment et qui contient le circuit électronique de commande, le premier compartiment étant sensiblement entouré par la cloison périphérique, le deuxième compartiment étant délimité par un troisième bac formé dans la cloison périphérique, et orienté vers l'extérieur,
- l'armature rigide est constituée en un alliage léger moulé et conçue de façon à pouvoir être directement boulonnée sur la caisse du véhicule,
- les bacs présentent des bords épais, le passage étranglé étant délimité par une rigole qui est évidée dans les bords épais des bacs et qui est fermée par une rondelle constituant la périphérie d'une plaquette perforée,
- les bords des bacs sont revêtus par une feuille métallique perforée emboutie sur laquelle sont adhérés des bords de la paroi épaisse et de la membrane,
- le dispositif antivibratoire comprend, immergée dans la chambre de travail, une capsule formant poche d'air, de préférence mise à l'air libre, délimitée par :
   . une portion centrale pleine appartenant à une plaquette perforée,
   . le piston, alors disposé entre cette portion centrale pleine et l'excitateur,
   . et un joint annulaire étanche et souple reliant le pourtour du piston à ladite portion centrale pleine.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

Les figures 1 et 2, de ces dessins, montrent respectivement en coupe verticale selon I-I, figure 2 et en coupe verticale selon II-II, figure 1, un support antivibratoire hydraulique établi selon un premier mode de réalisation de l'invention.

Les figures 3 et 4 sont respectivement une vue du dessus et une vue du dessous du boîtier nu constitutif dudit dispositif.

La figure 5 est une coupe transversale partielle du dispositif en question selon V-V, figure 1.

La figure 6 est une vue de dessus d'un support antivibratoire hydraulique selon un deuxième mode de réalisation de l'invention.

La figure 7 est une vue en coupe selon la ligne VII-VII du support antivibratoire de la figure 6.

Sur les différentes figures, les mêmes références désignent des éléments identiques ou similaires.

L'orientation qui a été adoptée pour le support sur les dessins sera retenue pour la description ci-après à un titre bien entendu non limitatif : en d'autres termes, ce support pourrait également être considéré, sans sortir du cadre de la présente invention, avec toute orientation désirable autre que celle illustrée, par exemple avec une orientation inclinée de 45 ou de 90°, ou même renversée par rapport à celle-ci, les termes "haut, bas..." devant alors être rectifiés en conséquence.

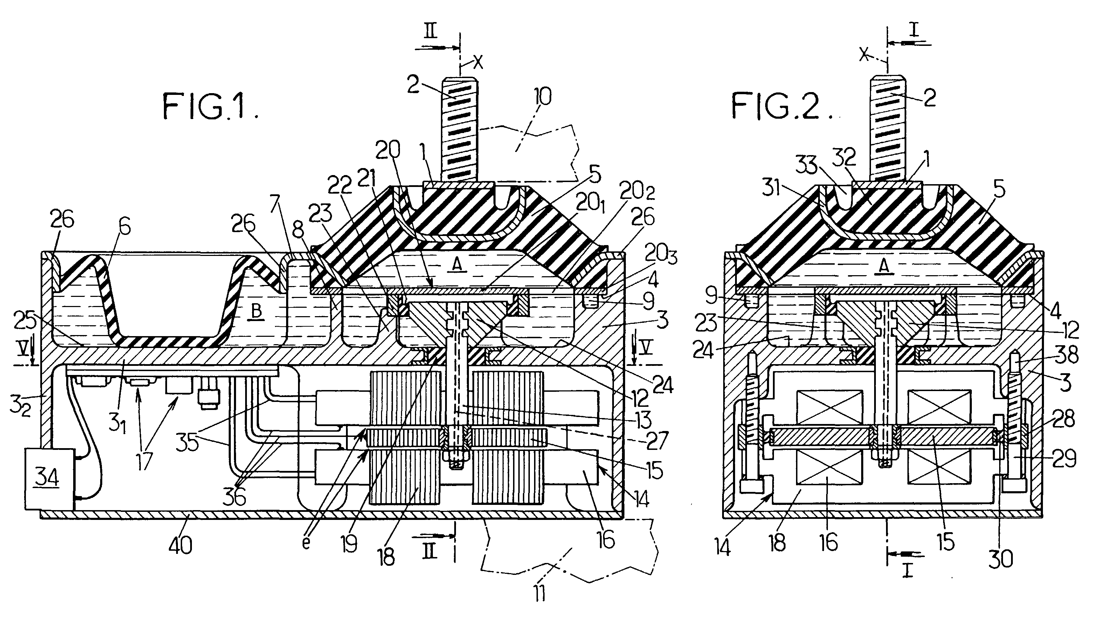

Ceci étant, le support représenté sur les figures 1 à 5 comprend :
- une tête rigide 1 constituée par une pastille centrale prolongée vers le haut par un goujon de fixation 2 d'axe X en attente,
- une armature rigide 3 sur laquelle on reviendra plus loin, armature comprenant en particulier une portée annulaire 4 d'axe X,
- une paroi tronconique épaisse en caoutchouc 5 d'axe X évasée vers le bas et présentant une bonne résistance à la compression axiale de façon à jouer un rôle de "support", ladite paroi reliant de façon étanche la tête 1 à la portée 4,
- un soufflet ou membrane étanche 6 relié de façon étanche à une seconde portée annulaire rigide 7 comprise par l'armature 3, soufflet constituant avec ladite armature et avec la paroi 5 une enceinte fermée,
- une cloison rigide 8 faisant partie de l'armature et divisant ladite enceinte en deux chambres, savoir une chambre de travail A du côté de la paroi 5 et une chambre de compensation B du côté du soufflet 6,
- un passage étranglé 9 reliant les deux chambres A et B entre elles,
- et une masse de liquide remplissant les deux chambres et le passage étranglé.

La tête rigide 1 est destinée à supporter un moteur à combustion interne 10 de véhicule alors que l'armature rigide 3 est destinée à être montée sur le châssis 11 de ce véhicule.

Comme il est connu, les oscillations de relativement basse fréquence et grande amplitude appliquées entre l'armature 3 et la tête 1 se traduisent par un refoulement alternatif à la même fréquence du liquide de l'un des deux compartiments A et B dans l'autre et inversement à travers le passage 9 et la colonne de liquide oscillante contenue dans ce passage est le siège d'un phénomène de résonance lorsque ladite fréquence atteint une valeur prédéterminée qui dépend des cotes dudit passage, ce phénomène ayant pour effet d'amortir la transmission des oscillations d'origine entre la tête et l'armature.

D'une façon également connue en soi, le support considéré comprend en outre un piston 12 dont une face baigne dans la chambre de travail A, piston solidarisé avec l'organe mobile 13 d'un excitateur ou actionneur électrique 14.

Cet excitateur est agencé de façon à exercer sur le piston 12 une "atténuation active" au sens défini ci-dessus et comprend à cet effet :
- un plateau ferromagnétique 15, de préférence feuilleté, solidaire de l'organe mobile 13, ici constitué par une tige d'axe X,
- au moins une bobine électrique 16 reliée à un circuit d'excitation électronique 17 et montée dans une carcasse 18 solidaire de l'armature 3 de façon à créer un circuit magnétique se refermant à travers le plateau 15 et des entrefers e de faible épaisseur,
- et une bague d'étanchéité 19 interposée entre la tige 13 et un orifice approprié 41 de l'armature pour rendre possibles les déplacements axiaux de ladite tige tout en isolant du liquide l'élément ferromagnétique 15.

Le piston 12 est monté à l'extrémité supérieure de la tige 13 et, conformément à ce qui a été décrit et illustré dans le second des deux documents EP cités ci-dessus, la face, de ce piston, qui est en contact avec le liquide de la chambre de travail A est ici sa face inférieure.

Comme expliqué dans ledit document, ce montage permet d'additionner la force d'inertie du piston à la force exercée par la pression hydraulique sur ce piston au lieu de venir en déduction de cette dernière, ce qui supprime la possibilité d'obtenir un zéro d'efficacité de l'atténuation active pour l'une des valeurs de la fréquence des oscillations imposées au piston.

A cet effet, on établit au sein de la chambre de travail A une capsule formant poche d'air délimitée inférieurement par le piston 12 et supérieurement par une paroi transversale rigide 20₁ solidarisée avec l'armature 3, le pourtour du piston étant connecté à cette paroi par un anneau souple et étanche 21.

Cet anneau 21 pourrait être directement connecté à ladite paroi 20₁, mais, pour simplifier et renforcer le montage, on préfère le connecter à une bague rigide 22 elle-même montée sur trois pieds 23 faisant partie de l'armature 3 et répartis angulairement à 120° les uns des autres autour de l'axe X : les espaces réservés angulairement entre ces trois pieds rendent possible la circulation du liquide entre le dessous du piston 12 et le reste de la chambre A.

La bague 22 est elle-même appliquée jointivement, selon la direction axiale, contre le dessous de la paroi 20₁, laquelle constitue la portion centrale pleine d'une plaquette 20.

Pour ce qui est de l'armature 3, on la constitue sous la forme d'un boîtier présentant l'allure générale d'un parallélépipède rectangle qui comprend dans sa portion supérieure un double bac formant les fonds, disposés côte à côte, des deux chambres de travail A et de compensation B et qui contient dans sa portion inférieure, côte à côte, l'actionneur 14 et le circuit électronique 17 de commande de celui-ci.

Plus précisément, ledit boîtier ou armature 3 est constitué par une plaque horizontale 3₁ de forme rectangulaire relativement épaisse dont la face supérieure est évidée par deux bacs voisins 24 et 25 définissant respectivement les fonds des deux chambres A et B et dont la face inférieure, bordée par un rebord vertical 3₂ relativement mince, constitue avec ce rebord le boîtier de réception de la portion électro-mécanique du support.

Le bord du bac 24 définit la portée annulaire 4 ci-dessus et c'est dans cette portée 4 qu'est évidée une rigole définissant l'essentiel du passage étranglé 9.

Cette rigole est fermée supérieurement par une rondelle 20₃ constituant la périphérie de la plaquette 20.

Dans le cas du dessin, la rigole définissant le passage étranglé 9 s'étend selon un arc de cercle de l'ordre de 320° autour de l'axe X et est terminé par deux raccords radiaux 9₁ et 9₂ dont le premier débouche dans le bac 24 et dont le second débouche dans le bac 25 après avoir traversé la cloison 8.

Des perforations 20₂ évidées dans la plaquette entre sa paroi centrale pleine 20₁ et la rondelle périphérique 20₃ assurent la continuité de la chambre A de part et d'autre de ladite plaquette.

Le bord du bac 25 définit quant à lui la portée annulaire 7.

Cette portée 7 est avantageusement recouverte, ainsi que les autres surfaces, de l'armature 3, qui affleurent au même niveau qu'elle par une feuille métallique 26 ajourée et emboutie en conformité avec ces surfaces.

L'ensemble en élastomère constitué par la paroi 5 et le soufflet 6 peut être moulé et vulcanisé en même temps sur cette feuille 26.

Ladite feuille 26 est fixée sur l'armature 3 de toute manière désirable, par exemple par sertissage ou vissage.

Il est à noter que la localisation côte à côte des deux chambres A et B présente les deux avantages suivants :
- étalement horizontal du support, dont la hauteur hors tout est alors fortement réduite, ce qui permet de superposer à la fois la chambre de travail A et l'actionneur 14 dans en encombrement vertical total ne dépassant pas celui d'un support passif du même type,
- possibilité de fabriquer simultanément et facilement les composants en élastomère des deux chambres A et B, ce qui n'aurait pas été possible avec une localisation de la chambre de compensation B au-dessous de la chambre de travail A, ou même avec une construction de la chambre B entourant l'actionneur.

L'armature 3 est avantageusement constituée par moulage d'un matériau présentant une bonne conductibilité thermique, notamment d'un alliage léger.

Comme bien visible encore sur les dessins,
- la poche à air qui est réservée entre le piston 12 et la paroi 20₁ est mise à l'air libre à travers un canal 27 évidé axialement dans la tige 13,
- le plateau 15 en matériau ferromagnétique dans lequel sont engendrées les contre-vibrations est supporté et guidé par deux entretoises rectangulaires 28 que traversent des vis 29 servant à assembler les paquets de tôle constitutifs de la carcasse 18 sur l'armature 3, lesdites entretoises étant serrées entre ces paquets et reliées audit plateau par l'intermédiaire de plots en caoutchouc 30,
- la liaison entre la portion supérieure de la paroi tronconique 5 et la tête 1 est effectuée par l'intermédiaire d'une coupelle métallique 31 et d'un plot en caoutchouc 32 contenu dans cette coupelle et évidé par une gorge circulaire 33 : cette gorge constitue une coupure radiale qui confère au support une grande souplesse selon les directions radiales, ce qui filtre les vibrations susceptibles d'être transmises radialement de la tête 1 à l'armature 3,
- le circuit électronique 17 est relié à un connecteur 34 propre à recevoir une alimentation électrique extérieure et comprend non seulement des fils 35 propres à alimenter les bobines 16, mais également des fils 36 propres à recueillir les informations données par un capteur (non représenté) des déplacements réels instantanés du plateau 15,
- l'armature 3 est évidée par des alésages 37 propres à livrer passage à des boulons de fixation de celle-ci sur une portée rigide appropriée de la caisse 11 du véhicule,

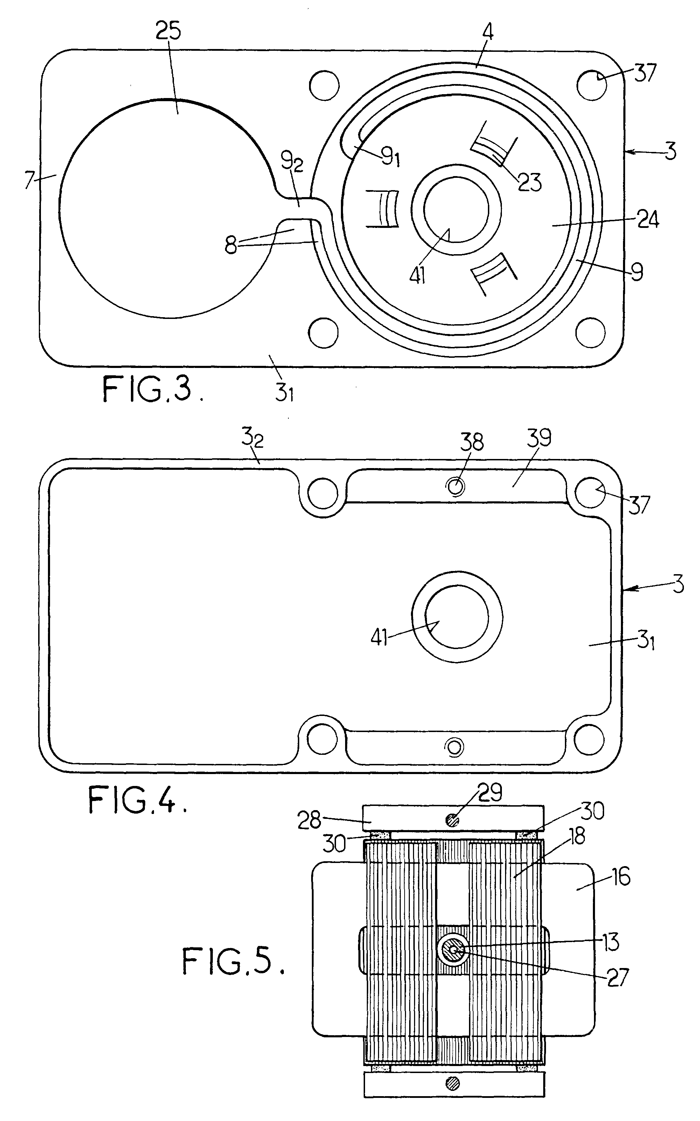

- sur la figure 4 on voit les alésages filetés 38 de réception des vis 29, évidés dans des épaulements 39 qui longent et renforcent les rebords 3₂,
- un socle 40 est rapporté sous la portion inférieure de l'armature 3 formant boîtier pour la fermer inférieurement.

En suite de quoi, et quel que soit le mode de réalisation adopté, on obtient finalement un support antivibratoire hydraulique de type actif dont la constitution et le fonctionnement résultent suffisamment de ce qui précède.

Ce support présente par rapport à ceux antérieurement connus un certain nombre d'avantages et en particulier les suivants :
- comme la chambre de compensation B est disposée transversalement à côté de la chambre de travail A au lieu d'être disposée au-dessous de cette chambre, il est possible de donner à la dimension verticale hors tout du support une valeur identique, et non pas supérieure, à celle des supports comparables de type passif, ce qui permet de remplacer purement et simplement lesdits supports passifs antérieurs par les nouveaux supports actifs ici proposés sans qu'il soit nécessaire pour autant de modifier l'organisation générale de la caisse et/ou celle du moteur du véhicule,
- comme le circuit électronique 17 se trouve contenu dans le même boîtier que l'actionneur 14 lui-même, il est inutile de prévoir des connections spéciales et relativement longues entre ce circuit et cet actionneur, connections exigeant le recours à des câblages, blindages et connecteurs particuliers susceptibles d'engendrer des parasites et dont l'exécution imparfaite risque de perturber le fonctionnement général,
- la possibilité de monter directement le boîtier-armature 3 sur la caisse 11 du véhicule, liée à la constitution de cette pièce en un matériau bon conducteur thermique, permet d'évacuer facilement vers ladite caisse toutes les calories éventuellement présentes et dues notamment à la puissance dissipée par l'électronique ou à la proximité du moteur en cours de fonctionnement, ce qui évite un échauffement indésirable du circuit électronique et améliore sa longévité,
- l'incorporation du circuit électronique et de l'actionneur dans un même boîtier permet d'éviter le recours à deux boîtiers indépendants, ainsi qu'au montage dédoublé de deux tels boîtiers sur la caisse du véhicule, ce qui conduit à une construction plus économique.

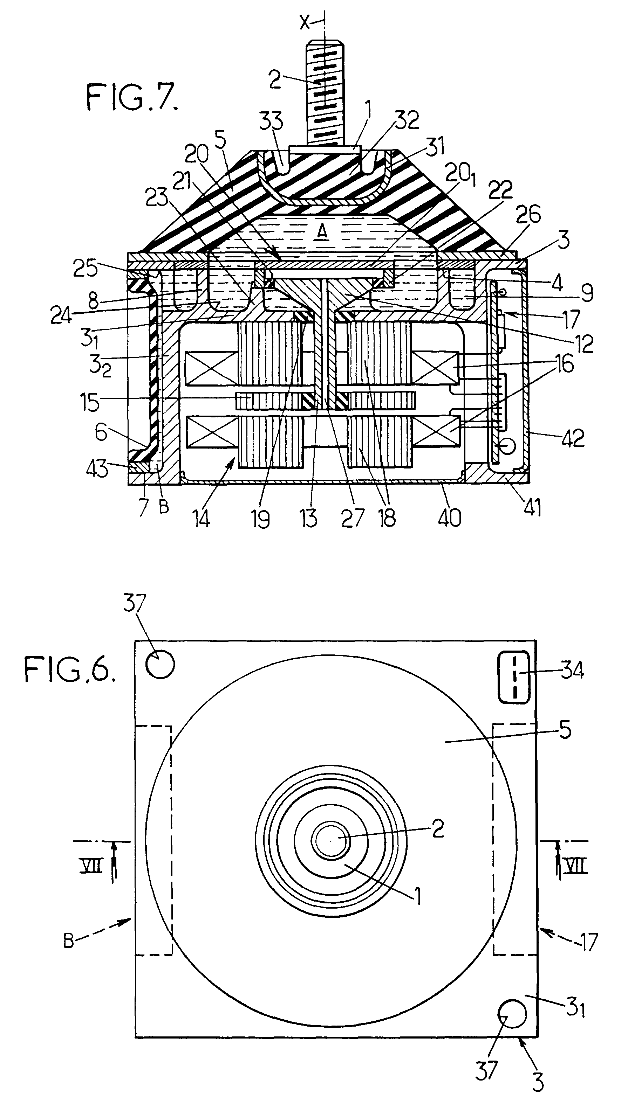

Par ailleurs, le support antivibratoire hydraulique représenté sur les figures 6 et 7 est similaire au support déjà décrit précédemment en regard des figures 1 à 5, de sorte que ce support ne sera pas décrit à nouveau en détail ici.

Il suffira de noter que le support des figures 6 et 7 se distingue essentiellement de celui des figures 1 à 5 par les points suivants :
- les deux cuvettes juxtaposées 24, 25 de l'armature rigide 3 ne sont pas formées toutes les deux dans la face supérieure de la plaque horizontale 3₁ : seul le bac 24 délimitant le fond de la chambre de travail A est formé dans la face supérieure de cette plaque 3₁, le bac 25 qui délimite le fond de la chambre de compensation B étant quant à lui formé sur la face extérieure du rebord vertical 3₂ de l'armature rigide, le long d'un des côtés de la plaque horizontale carrée ou rectangulaire 3₁ ;
- les parties électromécaniques 14, 17 du dispositif sont toujours séparées des parties hydrauliques A, B, 9, par l'armature rigide 3, mais seul l'actionneur électrique 14 se trouve à l'intérieur du rebord 3₂ de l'armature 3, le circuit d'excitation électronique 17 se trouvant quant à lui à l'extérieur de ce rebord, dans un bac ou évidement vertical 41 disposé le long d'un des côtés de la plaque horizontale 3₁, ce côté étant situé par exemple à l'opposé de la chambre de compensation B, et le circuit électronique 17 étant de préférence protégé par un couvercle rigide 42, qui ferme le bac 41 vers l'extérieur ;
- la feuille métallique 26 se présente sous la forme d'une rondelle plate qui est adhérisée uniquement à la base de la paroi tronconique 5 en élastomère, le pourtour de la membrane 6 en élastomère étant quant à lui adhérisé sur une bague métallique 43 fixée à l'intérieur du bac 25.

Le support antivibratoire qui vient d'être décrit en regard des figures 6 et 7 présente les avantages suivants :
- il présente un encombrement horizontal relativement faible, et en tout cas comparable à l'encombrement horizontal des supports antivibratoires dépourvus de moyens d'actionnement électromécaniques,
- comme dans la forme de réalisation des figures 1 à 5, le circuit électronique 17 se trouve au voisinage de l'actionneur 14, ce qui évite d'utiliser des connexions spéciales et longues entre ce circuit et cet actionneur,
- l'armature 3 peut être montée directement sur la caisse du véhicule, en évacuant facilement vers cette caisse les calories en excès,
- et l'incorporation du circuit électronique et de l'actionneur dans un même boîtier, solidaire des parties hydrauliques du dispositif, permet un montage aisé sur la caisse du véhicule et une construction plus économique.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes qui comportent toutes les caractéristiques de la revendication 1.

## Revendications

1. Dispositif antivibratoire hydraulique destiné à être interposé entre deux éléments rigides faisant partie respectivement de la caisse (11) d'un véhicule et du moteur (10) de ce véhicule, comprenant :
- une armature rigide (3) solidarisable avec l'élément rigide de la caisse et comportant une portée annulaire (4) qui présente un axe central (X),
- une tête rigide (1) solidarisable avec l'autre élément rigide,
- une paroi annulaire en élastomère (5) évasée vers le bas, de préférence tronconique, offrant une bonne résistance à la compression axiale et reliant de façon étanche la portée annulaire à la tête,
- une membrane flexible étanche (6) portée par l'armature et définissant avec elle, avec la paroi et avec la tête une enceinte étanche,
- une cloison rigide et étanche (8) portée par l'armature et divisant l'enceinte en une chambre de travail (A), du côté de la paroi, et une chambre de compensation (B), du côté de la membrane, ces deux chambres (A, B) présentant chacune un fond solidaire de l'armature rigide (3),
- un passage étranglé (9) faisant communiquer en permanence les deux chambres entre elles, une masse de liquide remplissant les deux chambres et le passage étranglé,
- un piston rigide (12) délimitant en partie la chambre de travail et monté sur l'armature de façon à pouvoir se déplacer avec une amplitude de débattement limitée par rapport à cette armature,
- un organe excitateur électrique (14) monté sur ladite armature pour déplacer ledit piston (12),
- et un circuit électronique (17) connectable à une source de courant électrique et propre à commander l'organe excitateur de façon à appliquer sur le piston des forces alternatives tendant à atténuer les vibrations de ce piston,
**caractérisé en ce que** l'armature rigide (3) forme :
- d'une part des premier et deuxième bacs (24,25) disposés côte à côte selon une direction perpendiculaire à l'axe central (X), ces bacs constituant les fonds (24,25) de la chambre de travail (A) et de la chambre de compensation (B),
- et d'autre part un boîtier contenant côte à côte l'organe excitateur (14) et son circuit électronique de commande (17), le boîtier étant séparé des chambres de travail et de compensation par l'armature rigide (3).

2. Dispositif antivibratoire selon la revendication 1, dans lequel l'armature rigide (3) est constituée par une plaque épaisse (3₁) présentant une première face qui est évidée par les premier et deuxième bacs et une deuxième face qui est bordée par une cloison périphérique (3₂) et qui délimite le boîtier avec cette cloison.

3. Dispositif antivibratoire selon la revendication 1, dans lequel l'armature rigide (3) comporte une plaque épaisse (3₁) présentant, d'une part, une première face qui est évidée par le premier bac (24) correspondant à la chambre de travail (A), et d'autre part, une deuxième face qui est bordée par une cloison périphérique (3₂) et qui délimite le boîtier avec cette cloison, le deuxième bac (25) étant formé dans la cloison périphérique (3₂) et étant orienté vers l'extérieur, le boîtier étant séparé en un premier compartiment qui contient l'organe excitateur (14) et un deuxième compartiment qui communique avec le premier compartiment et qui contient le circuit électronique de commande (17), le premier compartiment étant sensiblement entouré par la cloison périphérique (3₂), le deuxième compartiment étant délimité par un troisième bac (41) formé dans la cloison périphérique (3₂) et orienté vers l'extérieur.

4. Dispositif antivibratoire selon l'une quelconque des revendications précédentes, dans lequel l'armature rigide (3) est constituée en un alliage léger moulé et conçue de façon à pouvoir être directement boulonnée sur la caisse (11) du véhicule.

5. Dispositif antivibratoire selon l'une quelconque des précédentes revendications, dans lequel les bacs (24, 25) présentent des bords épais, le passage étranglé (9) étant délimité par une rigole qui est évidée dans les bords épais des bacs (24,25) et qui est fermée par une rondelle (20₃) constituant la périphérie d'une plaquette perforée (20).

6. Dispositif antivibratoire selon l'une quelconque des précédentes revendications, dans lequel les bords des bacs (24,25) sont revêtus par une feuille métallique perforée emboutie (26) sur laquelle sont adhérés des bords de la paroi épaisse (5) et de la membrane (6).

7. Dispositif antivibratoire selon l'une quelconque des précédentes revendications, comprenant, immergée dans la chambre de travail (A), une capsule formant poche d'air délimitée par :
- une portion centrale pleine (20₁) appartenant à une plaquette perforée (20),
- le piston (12), alors disposé entre cette portion centrale pleine et l'excitateur (14),
- et un joint annulaire étanche et souple (21) reliant le pourtour du piston à ladite portion centrale pleine.

8. Dispositif antivibratoire selon la revendication 7, dans lequel la capsule est mise à l'air libre.

## Claims

1. Hydraulic anti-vibration device intended to be interposed between two rigid elements forming part respectively of the body (11) of a vehicle and of the engine (10) of this vehicle, comprising:
- a rigid armature (3) which can be secured to the rigid element of the body and includes an annular bearing surface (4) which has a central axis (X),
- a rigid head (1) which can be secured to the other rigid element,
- an annular elastomer wall (5) which is flared downwards, preferably frustoconical, offering good resistance to axial compression and linking the annular bearing surface to the head in a sealed manner,
- a sealed flexible diaphragm (6) borne by the armature and defining with it, with the wall and with the head, a sealed enclosed space,
- a rigid and sealed partition (8) borne by the armature and dividing the enclosed space into a working chamber (A) on the same side as the wall and a compensation chamber (B) on the same side as the diaphragm, these two chambers (A, B) each having an end secured to the rigid armature (3),
- a restricted passage (9) allowing the two chambers always to communicate with each other, a mass of liquid filling the two chambers and the restricted passage,
- a rigid piston (12) partly delimiting the working chamber and mounted on the armature in such a way that it can move with a limited amplitude of travel with respect to this armature,
- an electric excitation member (14) mounted on the said armature in order to displace the said piston (12),
- and an electronic circuit (17) which can be connected to a source of electric current and is capable of controlling the excitation member in such a way as to apply to the piston alternating forces which tend to attenuate the vibrations of this piston,
characterised in that the rigid armature (3) forms:
- on the one hand, first and second pans (24, 25) arranged side by side along a direction which is perpendicular to the central axis (X), these pans constituting the ends (24, 25) of the working chamber (A) and of the compensation chamber (B),
- and, on the other hand, a housing containing side by side the excitation member (14) and its electronic control circuit (17), the housing being separated from the working chamber and the compensation chamber by the rigid armature (3).

2. Anti-vibration device according to Claim 1, in which the rigid armature (3) consists of a thick plate (3₁) having a first face which has the first and second pans hollowed from it and a second face which is bordered by a peripheral partition (3₂) and which with this partition delimits the housing.

3. Anti-vibration device according to Claim 1, in which the rigid armature (3) includes a thick plate (3₁) having, on the one hand, a first face from which the first pan (24) corresponding to the working chamber (A) is hollowed and, on the other hand, a second face which is bordered by a peripheral partition (3₂) and which with this partition delimits this housing, the second pan (24) being formed in the peripheral partition (3₂) and pointing outwards, the housing being separated into a first compartment which contains the excitation member (14) and a second compartment which communicates with the first compartment and which contains the electronic control circuit (17), the first compartment being substantially surrounded by the peripheral partition (3₂), the second compartment being delimited by a third pan (41) formed in the peripheral partition (3₂) and pointing outwards.

4. Anti-vibration device according to any one of the preceding claims, in which the rigid armature (3) consists of a cast light alloy and is designed in such a way that it can be bolted directly to the body (11) of the vehicle.

5. Anti-vibration device according to any one of the preceding claims, in which the pans (24, 25) have thick edges, the restricted passage (9) being delimited by a channel which is hollowed from the thick edges of the pans (24, 25) and which is closed by a washer (20₃) which constitutes the periphery of a perforated plate (20).

6. Anti-vibration device according to any one of the preceding claims, in which the edges of the pans (24, 25) are covered with a pressed perforated metal sheet (26) to which the edges of the thick wall (5) and of the diaphragm (6) are bonded.

7. Anti-vibration device according to any one of the preceding claims, comprising, immersed in the working chamber (A) , a capsule forming an air pocket delimited by:
- a solid central portion (20₁) belonging to a perforated plate (20),
- the piston (12), which is then arranged between this solid central portion and the excitation member (14),
- and a leaktight and flexible annular seal (21) linking the periphery of the piston to the said solid central portion.

8. Anti-vibration device according to Claim 7, in which the capsule is vented to atmosphere.

## Patentansprüche

1. Hydraulische schwingungsdämpfende Vorrichtung, die dazu vorgesehen ist, zwischen zwei steifen Elementen angeordnet zu werden, die zu der Karosserie (11) eines Fahrzeugs bzw. zum Motor (10) dieses Fahrzeugs gehören, bestehend aus:
- einer steifen Halterung (3), die mit dem steifen Element der Karosserie fest verbunden werden kann und eine ringförmige Auflagefläche (4) mit einer zentralen Achse (X) aufweist,
- einem steifen Kopf (1), der mit dem anderen steifen Element fest verbunden werden kann,
- einer ringförmigen Elastomer-Wand (5), die sich nach unten erweitert, vorzugsweise kegelstumpfförmig ist, eine gute Festigkeit gegen den axialen Druck bietet und die ringförmige Auflagefläche dicht mit dem Kopf verbindet,
- einer dichten, flexiblen Membran (6), die auf der Halterung sitzt und mit dieser, mit der Wand und mit dem Kopf einen dichten Raum bildet,
- einer steifen, dichten Trennwand (8), die auf der Halterung sitzt und den Raum zu der Wand hin in eine Arbeitskammer (A) und zur Membran hin in eine Ausgleichskammer (B) unterteilt, wobei diese beiden Kammern (A, B) jeweils einen mit der steifen Halterung (3) fest verbundenen Boden aufweisen,
- einem engen Durchlass (9), der die beiden Kammern ständig miteinander in Verbindung setzt, wobei die beiden Kammern und der enge Durchlass mit einer flüssigen Masse gefüllt sind,
- einem steifen Kolben (12), der die Arbeitskammer teilweise abgrenzt und dergestalt an der Halterung angebracht ist, dass er sich mit einer gegenüber dieser Halterung begrenzten Ausschlagamplitude verschieben kann,
- einem elektrischen Erregerorgan (14), das an dieser Halterung angebracht ist, um diesen Kolben (12) zu verschieben, und
- einer elektronischen Schaltung (17), die mit einer elektrischen Stromquelle verbunden werden kann und geeignet ist, das Erregerorgan dergestalt zu steuern, dass auf den Kolben hin- und herwechselnde Kräfte ausgeübt werden, die die Tendenz haben, die Schwingungen dieses Kolbens zu dämpfen,
**dadurch gekennzeichnet,**
**dass** die steife Halterung (3) aufweist:
- einerseits einen ersten und einen zweiten Behälter (24,25), die nebeneinander im rechten Winkel zu der zentralen Achse (X) angeordnet sind, wobei diese Behälter die Böden (24, 25) den Arbeitskammer (A) und der Ausgleichskammer (B) bilden,
- und andererseits einen Kasten, der nebeneinander das Erregerorgan (14) und seine elektronische Schaltung (17) enthält, wobei der Kasten durch die steife Halterung (3) von der Arbeitskammer und der Ausgleichskammer getrennt wird.

2. Schwingungsdämpfende Vorrichtung nach Anspruch 1, bei der die steife Halterung (3) aus einer dicken Platte (3_{L}) besteht, deren erste Seite Aussparungen für den ersten und den zweiten Behälter aufweist, und deren zweite Seite von einer Umfangstrennwand (3₂) umrandet wird und die den Kasten mit dieser Trennwand abgrenzt.

3. Schwingungsdämpfende Vorrichtung nach Anspruch 1, bei der die steife Halterung (3) eine dicke Platte (3₁) enthält, die einerseits eine erste Seite aufweist, die eine Aussparung für den ersten Behälter (24) aufweist, der der Arbeitskammer (A) entspricht, und andererseits eine zweite Seite aufweist, die von einer Umfangstrennwand (3₂) umrandet wird und die den Kasten mit dieser Trennwand abgrenzt, wobei der zweite Behälter (25) in der Umfangstrennwand (3₂) gebildet ist und nach außen gerichtet ist, wobei der Kasten in eine erste Abteilung, die das Erregerorgan (14) enthält, und eine zweite Abteilung, die mit der erste Abteilung kommuniziert und die die elektronische Steuerschaltung (17) enthält, unterteilt ist, wobei die erste Abteilung im wesentlichen von der Umfangstrennwand (3₂) umgeben ist, wobei die zwelte Abteilung von einem dritten Behälter (41) abgegrenzt wird, der in der Umfangstrennwand (3₂) gebildet ist und nach außen gerichtet ist.

4. Schwingungsdämpfende Vorrichtung nach einem der vorherigen Ansprüche, bei der die steife Halterung (3) aus einer Leichtmetalllegierung besteht, die so geformt und entworfen ist, dass sie direkt an die Karosserie (11) des Fahrzeugs geschraubt werden kann.

5. Schwingungsdämpfende Vorrichtung nach einem der vorherigen Ansprüche, bei der der erste und der zweite Behälter (24,25) dicke Ränder aufweisen, wobei der enge Durchlass (9) durch eine Rinne begrenzt wird, die in den dicken Rändern der Behälter (24, 25) ausgespart ist und durch eine Scheibe (20₃) verschlossen wird, die den Umfang einer durchbohrten Platte (20) bildet.

6. Schwingungsdämpfende Vorrichtung nach einem der vorherigen Ansprüche, bei der die Ränder der Behälter (24,25) von einer ausgebuchteten, durchbohrten Metallfolie (26) bedeckt sind, an der Ränder der dicken Wand (5) und der Membran (6) angeklebt sind.

7. Schwingungsdämpfende Vorrichtung nach einem der vorherigen Ansprüche, die in der Arbeitskammer (A) eingetaucht eine Kapsel aufweist, die eine Lufttasche bildet, die umgrenzt wird von:
- einem vollen, zentralen Abschnitt (20₁), der zu einer durchbohrten Platte (20) gehört,
- dem Kolben (12), der dazu zwischen diesem vollen, zentralen Abschnitt und dem Erreger (14) angeordnet ist, und
- einem ringförmigen, dichten und weichen Verbindungselement (21), das den Umfang des Kolbens mit diesem vollen, zentralen Abschnitt verbindet.

8. Schwingungsdämpfende Vorrichtung nach Anspruch 7, bei der die Kapsel ins Freie gebracht wird.
